(19) Europäisches Patentamt
European Patent Office
Office européen des brevets

(11) EP 4 467 525 A1

(12) EUROPEAN PATENT APPLICATION
published in accordance with Art. 153(4) EPC

(43) Date of publication:
27.11.2024 Bulletin 2024/48

(51) International Patent Classification (IPC):
$C03C\ 27/12^{(2006.01)}$     $H05B\ 3/03^{(2006.01)}$
$H05B\ 3/10^{(2006.01)}$     $H05B\ 3/86^{(2006.01)}$
$B60J\ 1/00^{(2006.01)}$     $B60J\ 1/20^{(2006.01)}$
$B60S\ 1/02^{(2006.01)}$

(21) Application number: 23743357.8

(22) Date of filing: 20.01.2023

(52) Cooperative Patent Classification (CPC):
B32B 17/00; B60J 1/00; B60J 1/20; B60S 1/02;
H05B 3/03; H05B 3/10; H05B 3/86

(86) International application number:
PCT/JP2023/001772

(87) International publication number:
WO 2023/140365 (27.07.2023 Gazette 2023/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.01.2022 JP 2022008322

(71) Applicant: NIPPON SHEET GLASS COMPANY, LIMITED
Tokyo 108-6321 (JP)

(72) Inventors:
• FUJIWARA, Takeshi
  Tokyo 108-6321 (JP)
• ASAOKA, Hisashi
  Tokyo 108-6321 (JP)

(74) Representative: Denno, Richard Christopher
Somer et al
Pilkington Group Limited
European Technical Centre
Hall Lane
Lathom
Ormskirk, Lancashire L40 5UF (GB)

(54) **WINDSHIELD**

(57) A windshield according to the present invention comprises: a sheet glass member having a heating region that includes at least a JIS R 3212-tested region A; and a heat-generating means that is disposed in the heating region. The heat-generating means comprises a plurality of heaters formed in a planar shape and arranged in a line in a first direction in the heating region, and a pair of busbars that are connected respectively to the ends in a second direction orthogonal to the first direction in each heater.

Fig. 1

**Description**

Technical Field

The present invention relates to a windshield.

Background Art

On a low temperature day or in a cold area, a windshield of an automobile may be clouded, which hinders driving. Therefore, various methods for removing clouding of a windshield have been proposed. For example, Patent Literature 1 discloses that a bus bar and a heating wire are disposed in a windshield, and clouding is removed by heat generated by the bus bar and the heating wire.

Citation List

Patent Literature

PTL 1: Japanese Patent Laid-open Publication No. 2017-229727

Summary of Invention

Technical Problem

In the windshield of Patent Literature 1, since a plurality of heating wires are disposed between a pair of bus bars, there is a problem that abnormal heat generation occurs in the bus bars when a current flowing through the bus bars increases in order to increase the amount of heat generation. The present invention has been devised to solve the above problem, and an object of the present invention is to provide a windshield capable of inhibiting abnormal heat generation of bus bars when a glass sheet is heated by the bus bars and heating wires.

Solution to Problem

Item 1. A windshield comprising:

a plate-shaped glass member having a heating region including at least a test region A of JIS R 3212; and
a heat generator disposed in the heating region,
wherein the heat generator includes:

a plurality of heaters arrayed in a first direction of the heating region and formed in a planar shape; and
for each of the heaters, a pair of bus bars connected to both ends of the heater in a second direction substantially orthogonal to the first direction.

Item 2. The windshield according to item 1, wherein an area of the heating region is 0.7 $m^2$ or more.
Item 3. The windshield according to item 1 or 2, wherein in each of the heaters, a length in the first direction over which the bus bar is connected is shorter than a length of the heater in the second direction.
Item 4. The windshield according to any one of items 1 to 3, wherein

each of the heaters includes a plurality of heating wires extending between the pair of bus bars, and
the heating wires and the bus bars are formed of the same material.

Item 5. The windshield according to any one of items 1 to 3, wherein

each of the heaters includes a plurality of heating wires extending between the pair of bus bars, and
the heating wires and the bus bars are formed of different materials.

Item 6. The windshield according to any one of items 1 to 5, wherein a resistance value at both ends of each of the bus bars is 2% or less of a resistance value of each of the heaters.
Item 7. The windshield according to any one of items 1 to 6, wherein each of the bus bars is formed in a band shape, and one surface of each of the bus bars is in contact with each of the heaters.

Item 8. The windshield according to item 7, wherein

the heat generator further includes an intermediate film disposed between one surface of each of the bus bars and each of the heaters, and

the intermediate film has a thermal conductivity lower than that of the bus bars.

Item 9. The windshield according to item 8, wherein the intermediate film is formed of Sn-based or In-based lead-free solder.

Item 10. The windshield according to any one of items 1 to 9, wherein

each of the heaters includes a plurality of heating wires extending between the pair of bus bars,

each of the bus bars is formed of a pair of sheet materials, and

the plurality of heating wires are sandwiched between the pair of sheet materials.

Item 11. The windshield according to any one of items 1 to 10, further comprising a shielding layer disposed on a peripheral edge portion of the glass member,

wherein each of the bus bars is disposed at a position corresponding to the shielding layer.

Item 12. The windshield according to item 11, wherein in the glass member, an area over which at least one of the plurality of heaters is disposed is different from an area over which the other heaters are disposed as a result of adjustment of an area of the shielding layer.

Item 13. The windshield according to any one of items 1 to 12, wherein

the glass member is formed in a rectangular shape having an upper edge, a lower edge, and a pair of side edges,

in the shielding layer, a width of portions along an upper edge and a lower edge of the glass member is larger than a width of portions along the side edges of the glass member,

the first direction is a direction along the upper edge and the lower edge of the glass member,

three of the heaters are arrayed in the first direction,

each of the bus bars is provided with a power supply unit configured to supply power to the bus bar, and

the power supply unit is disposed at a corner of the glass member.

Item 14. The windshield according to item 13, wherein a distance between the pair of bus bars connected to the heater disposed at a center in the first direction is wider than a distance between the pair of bus bars connected to each of the other heaters.

Item 15. The windshield according to any one of items 1 to 14, wherein

the glass member is formed of laminated glass including a pair of glass sheets, and

each of the heaters is disposed between the pair of glass sheets.

Advantageous Effects of Invention

With the windshield of the present invention, when a glass sheet is heated by a bus bar and a heating wire, abnormal heat generation of the bus bar can be inhibited.

Brief Description of Drawings

[Fig. 1] Fig. 1 is a front view illustrating a windshield according to one embodiment of the present invention.

[Fig. 2] Fig. 2 is a partial cross-sectional view of the windshield in Fig. 1.

[Fig. 3] Fig. 3 is a plan view of one example of a heating wire.

[Fig. 4] Fig. 4 is a cross-sectional view of a heating wire sheet.

[Fig. 5] Fig. 5 is a plan view of a heating wire sheet.

[Fig. 6] Fig. 6(a) is a side view of a furnace through which a mold passes, and Fig. 6(b) is a plan view of the mold.

[Fig. 7] Fig. 7 is a cross-sectional view illustrating one example of a method of manufacturing the windshield of the present invention.

[Fig. 8] Fig. 8 is a plan view illustrating another example of the windshield of the present invention.

[Fig. 9] Fig. 9 is a plan view illustrating another example of the windshield of the present invention.

[Fig. 10] Fig. 10 is a plan view illustrating another example of the windshield of the present invention.

[Fig. 11] Fig. 11 is a plan view illustrating another example of the windshield of the present invention.
[Fig. 12] Fig. 12 is a plan view illustrating another example of the windshield of the present invention.
[Fig. 13] Fig. 13 is a plan view illustrating another example of the windshield of the present invention.

Description of Embodiments

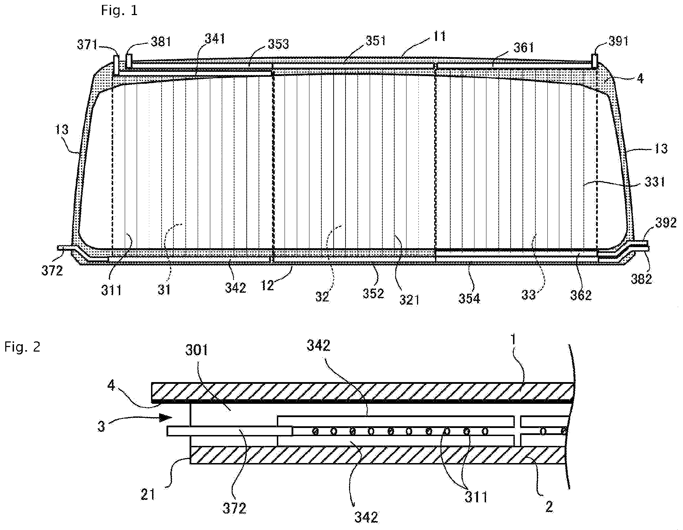

In the following, one embodiment of the windshield according to the present invention will be described with reference to drawings. Fig. 1 is a plan view of the windshield according to the present embodiment, and Fig. 2 is a partial cross-sectional view of Fig. 1. As illustrated in Figs. 1 and 2, the windshield according to the present embodiment includes laminated glass having an outer glass sheet 1, an inner glass sheet 2, and an intermediate film 3 disposed between the glass sheets 1 and 2. On at least one of the outer glass sheet 1 and the inner glass sheet 2 is laminated a shielding layer 4. Each of the constituent members will be described below.

< 1. Outline of windshield>

<1-1. Glass sheet>

Each of the glass sheets 1 and 2 is formed in a rectangular shape in which the lower edge 12 is longer than the upper edge 11. That is, it is formed in a trapezoidal shape surrounded by the upper edge 11, the lower edge 12, and both side edges 13. The glass sheets 1 and 2 to be used may be known glass sheets, and also may be formed of heat-ray absorbing glass, regular clear glass or green glass, or UV green glass. However, the glass sheets 1 and 2 are required to attain a visible light transmittance that conforms to the safety standards of a country in which automobiles are used. For example, an adjustment may be made such that the outer glass sheet 1 ensures a required solar absorptance and the inner glass sheet 2 attains a visible light transmittance that meets the safety standards. Examples of the compositions of clear glass, heat-ray absorbing glass, and soda-lime based glass are as follows.

(Clear glass)

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide (T-$Fe_2O_3$) in terms of $Fe_2O_3$: 0.08 to 0.14 mass%

(Heat-ray absorbing glass)

The composition of the heat-ray absorbing glass may be, for example, a composition obtained on the basis of the composition of the clear glass by setting the ratio of the total iron oxide (T-$Fe_2O_3$) in terms of $Fe_2O_3$ to 0.4 to 1.3 mass%, the ratio of $CeO_2$ to 0 to 2 mass%, the ratio of $TiO_2$ to 0 to 0.5 mass%, and reducing the skeletal components (mainly $SiO_2$ and $Al_2O_3$) of the glass by increase amounts of T-$Fe_2O_3$, $CeO_2$, and $TiO_2$.

(Soda-lime based glass)

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO+CaO: 5 to 15 mass%
$Na_2O+K_2O$: 10 to 20 mass%
$SO_3$: 0.05 to 0.3 mass%
$B_2O_3$: 0 to 5 mass%

EP 4 467 525 A1

Total iron oxide (T-Fe$_2$O$_3$) in terms of Fe$_2$O$_3$: 0.02 to 0.03 mass%

The thickness of the laminated glass according to the present embodiment is not particularly limited, but from the viewpoint of weight reduction, the total thickness of the outer glass sheet 1 and the inner glass sheet 2 is preferably set to 2.4 to 4.6 mm, more preferably set to 2.6 to 3.4 mm, and particularly preferably set to 2.7 to 3.2 mm. As described above, since it is necessary to reduce the total thickness of the outer glass sheet 1 and the inner glass sheet 2 in order to reduce the weight, the thicknesses of the outer glass sheet 1 and the inner glass sheet 2 may be determined as follows though the thickness of each glass sheet is not particularly limited.

The outer glass sheet 1 is mainly required to have durability and impact resistance against external obstacles, and when the laminated glass is used as a windshield of an automobile, the outer glass sheet is required to have impact resistance against a flying object such as a pebble. On the other hand, as the thickness increases, the weight undesirably increases. From this point of view, the thickness of the outer glass sheet 1 is preferably set to 1.0 to 3.0 mm, and more preferably set to 1.6 to 2.3 mm. What thickness is adopted may be determined according to the intended application of glass.

The thickness of the inner glass sheet 2 may be made equal to that of the outer glass sheet 1, but for example in order to reduce the weight of the laminated glass, the thickness may be made smaller than that of the outer glass sheet 1. Specifically, in consideration of the strength of glass, the thickness of the inner glass sheet is preferably 0.6 to 2.0 mm, more preferably 0.8 to 1.8 mm, and particularly preferably 0.8 to 1.6 mm. Furthermore, it is preferably 0.8 to 1.3 mm. With regard to the inner glass sheet 2 as well, what thickness is adopted may be determined according to the intended application of glass.

The shapes of the outer glass sheet 1 and the inner glass sheet 2 according to the present embodiment may be curved. However, when each of the glass sheets 1 and 2 has a curved shape, the sound insulation performance is believed to deteriorate as the depth of bend increases. The depth of bend is an amount indicating the bend of a glass sheet, and when a straight line L connecting the center of the upper edge and the center of the lower edge of the glass sheet is set, the largest distance between the straight line L and the glass sheet is defined as the depth of bend D.

Here, one example of a method for measuring the thickness in the case where the glass sheet is curved is described. First, the measurement positions are two positions, namely, an upper position and a lower position on a center line extending vertically at the horizontal center of the glass sheet. The measuring device is not particularly limited, and for example, a thickness gauge such as SM-112 manufactured by TECLOCK Co., Ltd. can be used. In the measurement, the glass sheet is disposed with a curved surface thereof being on a plane, and the measurement is performed with an end portion of the glass sheet sandwiched by the thickness gauge.

< 1-2. Shielding layer>

As illustrated in Fig. 1, a shielding layer 4 formed of a ceramic in a dark color such as black is laminated on a peripheral edge portion of the windshield. The shielding layer 4 is a layer that obstructs a view from the inside or the outside of a vehicle. In the shielding layer 4, the widths of the portions extending along the upper edge 11 and the lower edge 12 of the glass sheets 1 and 2 are larger than the widths of the portions extending along the side edges 13 and 14 of the glass sheets 1 and 2. Accordingly, as will be described later, the bus bars 341 to 362 and the power supply units 371 to 392 disposed along the upper edges 11 and the lower edges 12 of the glass sheets 1 and 2 can be easily hidden from the outside of a vehicle.

The driver or the like can see the outside of the vehicle through the region surrounded by the shielding layer 4 in the glass sheets 1 and 2. Therefore, this region serves as the heating region referred to in the present invention, and is heated by the heaters 31 to 33 as described later. In particular, the heating region includes a test region A defined in JIS R 3212 (1998). In addition, at least a part of a test region B defined in the same standard may be included. The area of the heating region may be 0.7 m$^2$ or more, 1.0 m$^2$ or more, 1.2 m$^2$ or more, or 1.5 m$^2$ or more. When the area of the heating region increases as described above, the value of the current flowing through the bus bar increases, and thus it is effective to heat the heating region with a plurality of heaters 31 to 33 as described later.

The shielding layer 4 can take various modes such as, for example, on only the inner surface of the outer glass sheet 1, on only the inner surface of the inner glass sheet 2, or on both the inner surface of the outer glass sheet 1 and the inner surface of the inner glass sheet 2. In Fig. 2, however, a state in which the shielding layer 4 is disposed on the surface of the outer glass sheet 1 facing the vehicle interior side is illustrated as one example. In addition, the shielding layer may be formed of various materials including a ceramic, and for example, the following composition may be used. [Table 1]

Table 1

|  |  | First and second colored ceramic pastes |
| --- | --- | --- |
| Pigment * 1 | mass% | 20 |

(continued)

|  |  | First and second colored ceramic pastes |
| --- | --- | --- |
| Resin (cellulosic resin) | mass% | 10 |
| Organic solvent (pine oil) | mass% | 10 |
| Glass binder *2 | mass% | 65 |
| Viscosity | dPs | 150 |
| *1, Main components: copper oxide, chromium oxide, iron oxide, and manganese oxide<br>*2, Main components: bismuth borosilicate and zinc borosilicate | | |

The ceramic can be formed by a screen printing method, but can also be prepared by transferring a transfer film for firing to a glass sheet and then firing the transfer film. When screen printing is employed, for example, the conditions may be set to a polyester screen: 355 mesh, a coating thickness: 20 $\mu$m, a tension: 20 Nm, a squeegee hardness: 80 degrees, an attachment angle: 75°, and a printing speed: 300 mm/s, and a ceramic can be formed by drying at 150°C for 10 minutes in a drying furnace.

Further, the shielding layer 4 may also be formed by laminating a ceramic or attaching a dark resin shielding film.

< 1-3. Intermediate film>

Subsequently, the intermediate film 3 will be described. The intermediate film 3 includes a plurality of heaters 31 to 33, pairs of bus bars 341 to 362 connected to the top end and the bottom end of each of the heaters 31 to 33, and an adhesive layer 37 for bonding the plurality of heaters 31 to 34 to the glass sheets 1 and 2. In the present embodiment, three heaters 31 to 33 arrayed in the horizontal direction are provided, and for convenience of description, a first heater 31, a second heater 32, and a third heater 33 shall be arrayed from left to right. Each of the constituent members will be described below.

<1-3-1. Heater>

Each of the heaters 31 to 33 has a plurality of heating wires 311 to 331 extending in the vertical direction, and the length in the vertical direction is longer than the length in the horizontal direction. The plurality of heating wires 311 to 331 are arranged in parallel. The glass sheets 1 and 2 are heated by the heat generated by the heating wires 311 to 331 to remove snow, ice, and cloud generated on a surface. Therefore, the heating wires 311 to 331 are required to have a calorific power that can perform deicing and the like. In the present embodiment, as will be described later, dimensions, etc. such as a calorific power, a line width and a pitch of the heating wires 311 to 331 are set.

The calorific power by the heating wires 311 to 331 can be calculated by the following Equation (1). The relationship between the resistance of a heating wire 314 and the length and cross-sectional area of the heating wire 3314 is expressed by Equation (2).

$$W = IV = RI^2 = V^2/R \qquad (1)$$

$$R = \rho \, (L/A) \qquad (2)$$

wherein W is power, E is voltage, I is current, R is resistance, L is length, A is cross-sectional area, and $\rho$ is electrical resistivity.

Therefore, according to the above Equations (1) and (2), for example, in order to increase the calorific power of the heating wires 311 to 331, there are measures such as reducing the resistance R, shortening the length L of the heating wires 311 to 331, increasing the cross-sectional area A of the heating wires 311 to 331, and reducing the electric resistivity $\rho$. In order to increase the calorific power, there is also a measure of increasing the number of heating wires 311 to 331 to increase the total cross-sectional area A. In consideration of the above points, the heating wires 311 to 331 will be described below.

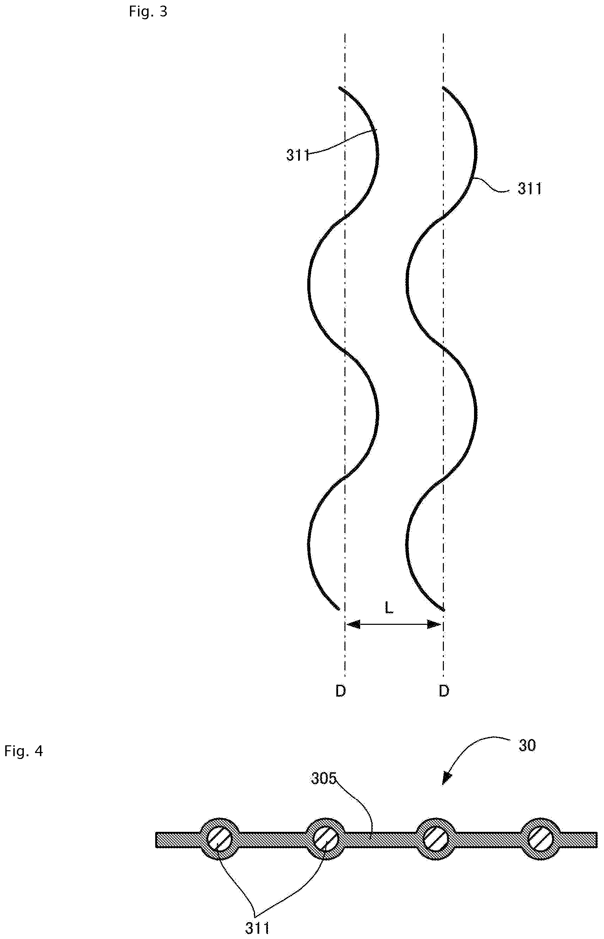

Each of the heating wires 311 to 331 may be formed linearly, and may be formed in various shapes such as a wavy shape. For example, as illustrated in Fig. 3, forming each of the heating wires 311 to 331 into a sinusoidal wavy shape renders the distribution of heat uniform, and can optically prevent the heating wires 311 to 331 from disturbing the visual field of the windshield. At this time, the crimping rate of the heating wires 311 to 331 may be set to, for example, 150% or less. The crimping rate is a ratio of an actual length (a length following a curve) of a heating wire 314 to a length between both ends of each of the heating wires 311 to 331.

The line width of each of the heating wires 311 to 331 is preferably 1 to 100 $\mu$m, and more preferably 1 to 50 $\mu$m. Furthermore, the line width is preferably 1 to 35 $\mu$m. The smaller the line width such that the upper limit of the line width is 10 $\mu$m, the more difficult it is to visually recognize the heating wire. As described later, the smaller the line width is, the smaller the thickness of heating wire 314 needs to be. As a result, the cross-sectional area of the heating wires 311 to 331 decreases, and the calorific power increases. On the other hand, if the line width is excessively small, it may be impossible to manufacture or the calorific power may be excessively large. The line width refers to a line width of the largest part of a cross-sectional shape of the heating wires 311 to 331. For example, when the cross-sectional shape of the heating wires 311 to 331 is trapezoidal, the width of the lower edge is the line width, and when the cross-sectional shape of the heating wires 311 to 331 is circular, the diameter is the line width. The width of the heating wire 314 can be measured with a microscope such as VHX-200 (manufactured by KEYENCE CORPORATION) at a magnification of 1000 times, for example.

The line width of the heating wires 311 to 331 may not be constant, and may be varied. For example, the heating wires may be formed so as to gradually thin or thicken as going downward. Alternatively, the line width may be changed for each region.

The lower limit of the pitch between adjacent heating wires 311 to 331 is not particularly limited, but is, for example, preferably 0.3 to 6 mm, and more preferably 1.25 to 4 mm. When the pitch is small, the heating wires may be easily visually recognized, whereas when the pitch is large, the glass sheets 1 and 2 may not be sufficiently heated. In consideration of this, it is preferable to set the pitch of the heating wires 311 to 331 as described above. The pitch is not a length of a gap between the adjacent heating wires 311 to 331, but is a length obtained by adding a line width of the heating wire 311 to 331 to a length of a gap between the adjacent heating wires 311 to 331. When the heating wires 311 to 331 are formed in a sinusoidal shape, the distance L between the center lines D of the heating wires 311 to 331 is a pitch of the heating wires 311 to 331. The pitch of the heating wires 311 to 331 may vary in each heater or may vary among a plurality of heaters.

The calorific power per unit length of each of the heating wires 311 to 331 is, for example, preferably 2.0 W/m or less, more preferably 1.5 W/m or less, and particularly preferably 1.0 W/m or less when a voltage of 13.5 V is applied to between both bus bars.

In the present embodiment, as illustrated in Fig. 1, the first heater 31 and the third heater 33 are substantially the same in length in the vertical direction, and the second heater 32 is slightly longer in the vertical direction than the other heaters 31 and 33. More specifically, the upper end of the second heater 32 is located slightly above the upper end of the first heater 31, whereas the lower ends of the first heater 31 and the second heater 32 are located at substantially the same position. The upper ends of the second heater 32 and the third heater 33 are located at substantially the same position, whereas the lower end of the third heater 33 is located slightly above the lower end of the second heater 32.

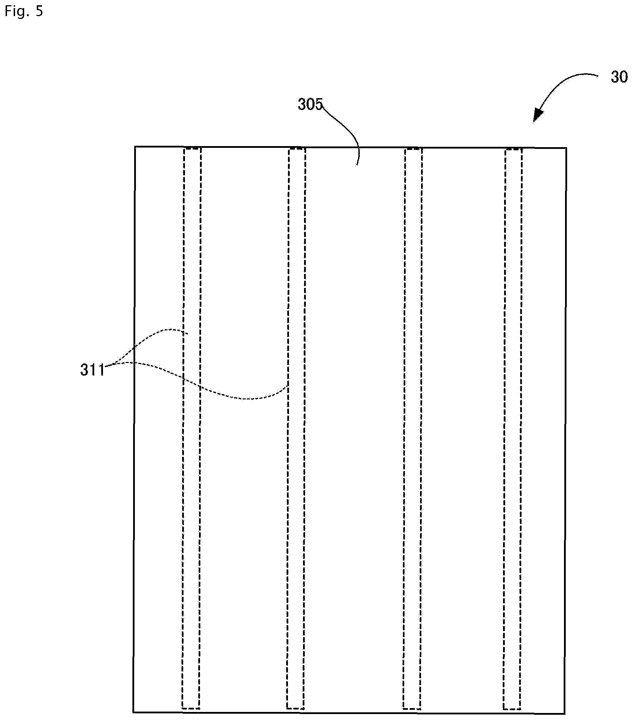

Each of the heaters 311 to 331 is prepared in such a manner that the heating wires 311 to 331 are embedded in a resin material at the time of manufacture. This is referred to as a heating wire sheet 30. As illustrated in Figs. 4 and 5, in the heating wire sheet 30, a plurality of heating wires 311 to 331 are arranged in parallel on a sheet-shaped resin material 305. The resin material 305 is the same material as an adhesive layer 301 described later. As illustrated in Figs. 4 and 5, the diameter of the heating wires 311 to 331 may be either larger than the thickness of the resin material 305 or smaller than the thickness of the resin material 305.

< 1-3-2. Bus bar>

As illustrated in Fig. 2, in the present embodiment, each of the bus bars 341 to 362 is formed of two band-shaped sheet materials, and these sheet materials are disposed so as to sandwich both ends of the heating wires 311 to 331. In the two sheet materials, an adhesive such as solder is applied to surfaces facing each other. The solder to be used here is not particularly limited, and for example, Sn-based or In-based lead-free solder can be used. In each of the bus bars 341 to 362, a heat shielding layer having a lower thermal conductivity than the bus bars 341 to 362 may be formed on a surface in contact with the heating wires 311 to 331. As a result, the heat shielding layer is formed between the heating wires 311 to 331 and the bus bars 341 to 362, so that the heat generated by the heating wires 311 to 331 is less likely to be transferred to the bus bars 341 to 362, whereby the temperature rise of the bus bars 341 to 362 can be inhibited. As a material for forming such a heat shielding layer, for example, metal such as Sn, Zn, In, Bi, Ti, or Ni, or an alloy containing Sn, Zn, In, Bi, Ti, or Ni as a main component can be used. As the heat shielding layer, a second heat shielding layer may be laminated on at least a surface of the bus bars 341 to 362 facing the heating wires 311 to 331 by plating or the like. By not laminating the second heat shielding layer on the surface of bus bars 341 to 362 opposite to the surface facing the heating wires 311 to 331, heat transferred to the bus bars 341 to 362 can be easily released.

As illustrated in Fig. 1, a first upper bus bar 341 and a first lower bus bar 342 are attached to the upper end and the lower end of the first heater 31, respectively. The left end of the first upper bus bar 341 is connected to the first upper power supply unit 371 provided at the upper left corner of each of the glass sheets 1 and 2. The left end of the first lower bus bar 342 is connected to a first lower power supply unit 372 provided at the lower left corner of each of the glass sheets 1 and 2. Notches 21 (see Fig. 2) are formed at four corners of the inner glass sheet 2, and the corners of the outer glass sheet 1 are exposed to the vehicle interior side due to the notches 21. Since each of the power supply units 371,372 is disposed in this exposed portion, each of the power supply units 371,372 is exposed to the vehicle interior side. Therefore, a cable (not shown) connected to a battery (not shown) can be connected to each of the power supply units 371,372 on the inner surface of the outer glass sheet 1 from the vehicle interior side. Each of the power supply units 371,372 is formed of one band-shaped sheet material and extends to the outside of the glass sheets 1 and 2. The structure of the exposure of the power supply units 371,372 is similar in the power supply units of the second and third heaters 32 and 33 to be described later, and thus the description thereof will be omitted.

A second upper bus bar 351 and a second lower bus bar 352 are attached to the upper end and the lower end of the second heater 32, respectively. A first extension bus bar 353 extending leftward is attached to the left end of the second upper bus bar 351. The first extension bus bar 353 is disposed above the first upper bus bar 341 with a gap interposed therebetween, and is connected to a second upper power supply unit 381 provided at the upper left corner of the glass sheets 1 and 2. The second upper power supply unit 381 is disposed on the right side of the first upper power supply unit 371. On the other hand, a second extension bus bar 354 extending rightward is attached to the left end of the second lower bus bar 352. The second extension bus bar 354 is connected to a second lower power supply unit 382 provided at the lower right corner of each of the glass sheets 1 and 2. As described above, the second upper power supply unit 381 and the second lower power supply unit 382 may be provided separately from the first extension bus bar 353 and the second extension bus bar 354, or may be formed by extending the first extension bus bar 353 and the second extension bus bar 354. A gap is formed between the second lower bus bar 352 and the first lower bus bar 342.

Since the upper end of the second heater 32 is located slightly above the upper end of the first heater 31, the first extension bus bar 353 passes above the first upper bus bar 341. The first extension bus bar 353 and the second extension bus bar 354 are formed of one band-shaped sheet material, and the end of each of the extension bus bars 353,354 is sandwiched between two sheet materials constituting the first upper bus bar 351 and the first lower bus bar 352.

A third upper bus bar 361 and a third lower bus bar 362 are attached to the upper end and the lower end of the third heater 33, respectively. The right end of the third upper bus bar 361 is connected to a third upper power supply unit 391 provided at the upper right corner of each of the glass sheets 1 and 2. The right end of the third lower bus bar 362 is connected to a third lower power supply unit 392 provided at the lower right corner of each of the glass sheets 1 and 2. The second extension bus bar 354 passes below the third lower bus bar 362. That is, a gap is formed between the second extension bus bar 354 and the third lower bus bar 362. A gap is formed between the second upper bus bar 351 and the third upper bus bar 361. The gaps described above are formed such that the bus bars of the respective heaters are not electrically connected to the bus bars of the other heaters. However, since such gaps are also formed in other examples described later, the description thereof is omitted in other examples.

For example, a power supply voltage of 10 to 50 V is applied to these power supply units.

Each of the bus bars 341 to 362 is disposed near the upper edge 11 or the lower edge 12 of the glass sheets 1 and 2, and is hidden by the above-described shielding layer 4 when viewed from the outside of the vehicle. In addition, since the shielding layer 4 is also disposed at the corners of the glass sheets 1 and 2, the power supply units 371 to 392 are also hidden by the shielding layer 4 when viewed from the outside of the vehicle.

Next, materials of the heating wires 311 to 331, the bus bars 341 to 362, and the power supply units 371 to 392 will be described. These members may be formed of the same material and may be formed of various materials, such as copper (or tin-plated copper), gold, aluminum, magnesium, cobalt, tungsten, silver, or alloys of these metals. Among them, silver, copper, gold, and aluminum, which are materials having an electric resistivity of $3.0 \times 10^{-8}$ Ωm or less, are particularly preferably used. These members may also be formed of different materials. In each of the heaters 31 to 33, the resistance value between both ends of each of the bus bars 341 to 362 may be, for example, 5% or less, and also may be 2% or less of the resistance value of the plurality of heating wires 311 to 331 between the bus bars 341 to 362. As a result, heat generation in the bus bars 341 to 362 can be reduced. For this purpose, for example, the bus bars 341 to 362 may be formed of a material having low resistance, and the heating wires 311 to 331 may be formed of a material having high resistance.

< 1-3-3. Adhesive layer>

Both adhesive layers 301 are sheet-like members for bonding the heaters 31 to 33 to the glass sheets 1 and 2. The adhesive layers 301 are formed in the same size as the glass sheets 1 and 2. Furthermore, the adhesive layers 37 may be formed of various materials, and may be formed of, for example, polyvinyl butyral resin (PVB) or ethylene vinyl acetate (EVA). The polyvinyl butyral resin is preferable because it is superior in adhesion to each glass sheet and in penetration resistance.

<1-3-4. Thickness of intermediate film>

The total thickness of the intermediate film 3 is not particularly limited, but is preferably 0.3 to 6.0 mm, more preferably 0.5 to 4.0 mm, and particularly preferably 0.6 to 2.0 mm. The thickness of the adhesive layer 37 is, for example, preferably 1 to 1000 μm, and more preferably 25 to 800 μm. In particular, when the thickness of the adhesive layer 301 is large, a step generated between the bus bars 341 to 362 and the glass sheets 1 and 2 at the time of assembly can be absorbed by the adhesive layer, so that a defoaming effect is exhibited.

The thickness of the intermediate film 3 does not need to be constant over the entire region, and for example, the intermediate film may be in a wedge shape in section so as to be suited to laminated glass to be used for a head-up display. In this case, the thickness of the adhesive layer 301 of the intermediate film 3 is measured at a place having the smallest thickness, that is, the lowermost edge portion of the laminated glass. When the intermediate film 3 has a wedge shape, the outer glass sheet 1 and the inner glass sheet 2 are not arranged in parallel to each other, and such an arrangement shall also be included in the glass sheet in the present invention. That is, the present invention includes, for example, the arrangement of the outer glass sheet 1 and the inner glass sheet 2 when an intermediate film 3 in which the thickness increases at a change rate of 3 mm or less per meter is used.

<2. Method for manufacturing windshield>

Next, a method of manufacturing a windshield will be described. First, a production line of a glass sheet is described.

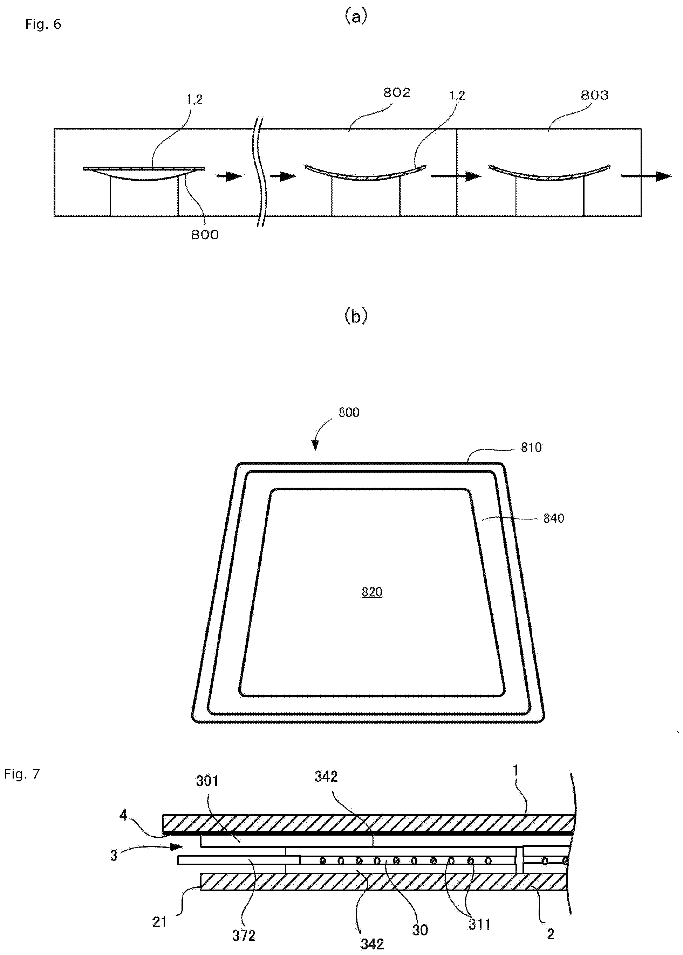

Here, a mold will be described in more detail with reference to Fig. 6. Fig. 6(a) is a side view of a furnace through which the mold passes, and Fig. 6(b) is a plan view of the mold. As illustrated in Fig. 6(b), the mold 800 includes a frame-shaped mold body 810 that substantially matches the profiles of both the glass sheets 1 and 2. Since the mold body 810 is formed in a frame shape, the mold body has inside an internal space 820 penetrating in the vertical direction. The peripheral edge portions of both the flat glass sheets 1 and 2 are placed on the upper surface of the mold body 810. Therefore, heat is applied to the glass sheets 1 and 2 from a heater (not shown) disposed on the bottom edge through the internal space 820. As a result, both the glass sheets 1 and 2 are softened by heating, and are curved downward by their own weight. A shielding plate 840 for shielding heat may be disposed on the inner peripheral edge of the mold body 810, whereby the heat received by the glass sheets 1 and 2 can be adjusted. Further, the heater may be provided not only below the mold 800 but also above the mold.

Then, after the above-described shielding layer 4 is laminated with the platelike outer glass sheet 1 and the platelike inner glass sheet 2, the outer glass sheet 1 and the inner glass sheet 2 are stacked together, and passed through a heating furnace 802 as illustrated in Fig. 6(a) in a state of being supported by the mold 800. When heated to the vicinity of the softening point temperature in the heating furnace 802, the portion inside the peripheral edge portion of each of the glass sheets 1 and 2 is curved downward by its own weight, and the glass sheets 1 and 2 are formed into a curved shape. Subsequently, both the glass sheets 1 and 2 are carried from the heating furnace 802 into an annealing furnace 803, and are subjected to annealing treatment. Thereafter, both the glass sheets 1 and 2 are carried out of the annealing furnace 803 and cooled.

When the outer glass sheet 1 and the inner glass sheet 2 are molded in this way, subsequently, an intermediate film 3 is sandwiched between the outer glass sheet 1 and the inner glass sheet 2. Specifically, as illustrated in Fig. 7, the inner glass sheet 2, one sheet material of each of the bus bars 341 to 362, a heating wire sheet 30, extension bus bars 353 and 354, the other sheet material of each of the bus bars 341 to 362, an adhesive layer, an adhesive layer 301, and the outer glass sheet 1 are laminated in this order. Power supply units 371 to 392 are also attached to the respective bus bars 341 to 362. The power supply units 371 to 392 may be placed on the ends of the respective bus bars bus bar 341 to 362, for example. Each of the bus bars 341 to 362 may also be temporarily fixed to the inner glass sheet 2 with an adhesive or the like. The number of the adhesive layer 301 may be one, or a plurality of adhesive layers may be stacked.

The laminate in which both the glass sheets 1 and 2 and the intermediate film 3 are laminated in this way is put into a rubber bag, and preliminarily bonded at about 70 to 110°C under vacuum suction. The method of preliminary bonding may be other than that, and the following method may also be employed. For example, the laminate is heated in an oven at 45 to 65°C. Next, the laminate is pressed by a roll at 0.45 to 0.55 MPa. Subsequently, the laminate is heated again in the oven at 80 to 105°C and then is pressed again by a roll at about 0.45 to 0.55 MPa. In this way, the preliminary bonding is completed.

Next, permanent bonding is performed. The preliminarily bonded laminate is subjected to permanent bonding using an autoclave at, for example, 8 to 15 atm and at 100 to 150°C. Specifically, for example, the permanent bonding may be performed under the conditions of 14 atm and 135°C. Through the preliminary bonding and the permanent bonding described above, the adhesive layer 301 is bonded to each of the glass sheets 1 and 2. In addition, since the resin material 305 constituting each heating wire sheet 30 is formed of the same material as the adhesive layer 301, the resin material is melted and integrated during the preliminary bonding and the permanent bonding. In this way, inside the intermediate film 3, both ends of the plurality of heating wires 311 to 331 of each of the heaters 31 to 33 are connected to the bus bars 341 to 361. In this way, the laminated glass according to the present embodiment is manufactured. Curved glass sheets 1 and 2 can also be manufactured by methods other than the above, for example, press working.

<3. Method for using windshield>

The windshield configured as described above is attached to a vehicle body, and a cable connected to a battery is fixed to each of the power supply units 371 to 392. Then, when each cable is energized, a current is applied to the heating wires 311 to 331 via the power supply units 371 to 392 and the respective bus bars 341 to 362 to generate heat. By this heat generation, it is possible to remove fogging of the heating regions of the glass sheets 1 and 2 or to perform deicing.

<4. Features>

As described above, according to the present embodiment, the following effects can be acquired.

(1) The intermediate film 3 is provided with a plurality of heaters 31 to 33, and the respective heaters 31 to 33 are configured such that the bus bars 341 to 362 independently supplies power to the heating wires 311 to 331. Therefore, by reducing the current flowing through the bus bars 341 to 362, abnormal heat generation in the bus bars 341 to 362 can be inhibited.

(2) In the respective heaters 31 to 33, when the bus bars 341 to 362 and the heating wires 311 to 331 are formed of the same material, no contact resistance occurs at connection portions, so that abnormal heat generation can be inhibited.

(3) Since each of the bus bars 341 to 362 is formed of two sheet materials and heating wires are disposed therebetween, a contact area between the heating wires 311 to 331 and the bus bars 341 to 362 can be increased. Therefore, a current is dispersed, and abnormal heat generation in the bus bars 341 to 362 can be inhibited.

(4) Since each of the bus bars 341 to 362 is disposed in a portion corresponding to the shielding layer 4, the shielding layer 4 can prevent the bus bars 341 to 362 from being visible from the outside of a vehicle. In particular, since the widths of the shielding layer 4 on the upper edge 11 side and the lower edge 12 side are increased, the bus bars 341 to 362 can be easily hidden. On the other hand, since the widths on both side edges 13 sides of the shielding layer 4 are reduced, the visual field through the glass sheets 1 and 2 can be inhibited from narrowing.

(5) In the above embodiment, since the second heater 32 is longer in the vertical direction than the other heaters 31 and 33, steps are formed between the second heater 32 and the other heaters 31 and 33 at their upper ends or lower ends. Therefore, since the extension bus bars 353 and 354 are disposed utilizing these steps and are extended to the power supply units 381 and 382 at the corners of the glass sheets 1 and 2, all the power supply units of the three heaters can be concentrated at the corners of the glass sheets. Therefore, the cables (wiring) can be easily routed to the power supply units 371 to 392.

<5. Modification Examples>

The embodiment of the present invention has been described above, but the present invention is not limited to the above embodiment, and various modifications can be carried out without departing from the gist of the invention. In addition, the following modifications can be appropriately combined.

<5-1>

In each of the embodiments described above, the respective bus bars 371 to 392 and the like are formed so as to be hidden by the shielding layer 4, but the present invention is not limited such a design, and the bus bars may not be hidden by the shielding layer 4. In addition, the shape of the shielding layer 4 is not particularly limited, and may be appropriately changed. The shielding layer 4 is not necessarily provided, and in this case, the entire glass sheets 1 and 2 can be the heating region.

<5-2>

In the embodiment described above, three heaters 31 to 33 are provided, but the number of heaters is not particularly limited, and may be two or four or more. The upper limit is not particularly limited, but the number of heaters is preferably 9 or less, and more preferably 7 or less. In particular, since the glass sheets 1 and 2 for a windshield are formed to have small curvatures on both side edges and large curvatures near the center, when one heating sheet 30 is attempted to dispose in a region having different curvatures, wrinkles may occur. Therefore, for example, when three or more heaters are provided, different heating sheets may be disposed at the center and both side edges of the glass sheets, so that the occurrence of wrinkles can be inhibited. From this point of view, the number of heaters may be, for example, an odd number. The heaters may be arrayed either in the horizontal direction of the windshield or in the vertical direction. When the heaters are arrayed in the vertical direction, the bus bars are disposed along each side edge 13 so as to extend in the vertical direction.

The widths of the heaters in the horizontal direction may be either the same or different. For example, in the glass sheets 1 and 2, the heater disposed in a portion having a small curvature may be designed to have a small width. The width of a heater refers to a distance between the heating wires disposed on both sides. The areas of the respective heaters may be either the same or different. For example, the ratio of the area of the heater having the smallest area to the area of the heater having the largest area is preferably 0.5 or more, more preferably 0.7 or more, and particularly preferably 0.9 or more. That is, it is preferable to inhibit an overcurrent from flowing to a specific heater by minimizing the difference in area among the respective heaters.

<5-3>
The configuration of the intermediate film 3 is not particularly limited as long as the bus bars 341 to 362 and the heating wires 311 to 331 are disposed inside the intermediate film. Therefore, as described above, one adhesive layer may be disposed on either of the glass sheets 1 and 2, or two adhesive layers may be disposed so as to sandwich the bus bars 341 to 362, etc. Further, as long as the bus bars 341 to 362 and the heating wires 311 to 331 can be disposed inside the intermediate film 3, the method for manufacturing the windshield is not limited to the above-described method.

<5-4>
In the above embodiment, each of the bus bars 341 to 362 is formed of two sheet materials, and the heating wires 311 to 331 and the extension bus bars 353 and 354 are disposed therebetween. However, the present invention is not limited thereto, and each of the bus bars 341 to 362 may be formed of one sheet material, and the heating wires 311 to 331 and the extension bus bars 353 and 354 may be brought into contact with the sheet material. That is, it is sufficient that the bus bars 341 to 362, the extension bus bars 353 and 354, the power supply units 371 to 392, and the heating wires 311 to 331 are electrically connected, and a connection method thereof is not particularly limited. For example, the respective bus bars may be extended without using the extension bus bars 353 and 354.

<5-5>
The shapes of the glass sheets 1 and 2 are not particularly limited as long as the upper edge 11, the lower edge 12, and the pair of side edges 13 can be specified in terms of an outer shape, and the glass sheets 1 and 2 do not necessarily have a rectangular shape. Each of the sides 11 to 13 may be either a straight line or a curved line.

<5-6>
An information acquisition region for acquiring information on the outside of the vehicle by an information acquisition device such as a camera or a sensor may be provided in a part of the heating region. The information acquisition device is attached to a surface of the inner glass sheet on the vehicle interior side with a bracket.

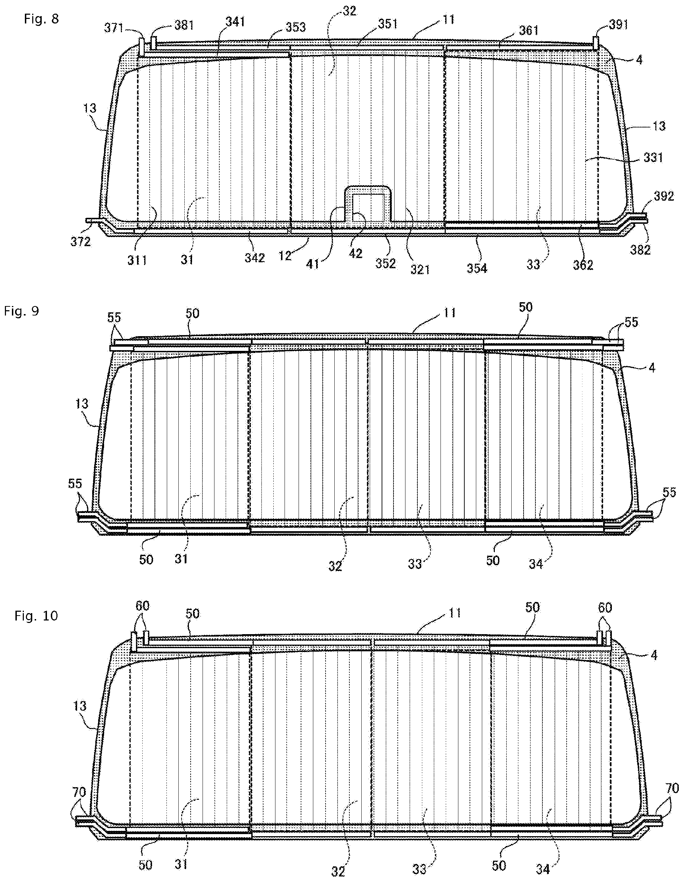

In this case, as illustrated in Fig. 8, the lower portion of the shielding layer 4 is protruded toward the heating region, a window portion 42 is provided in the protruding portion 41, and the window portion 42 may be employed as the information acquisition region. Since heating wires also pass through the information acquisition region, the region corresponding to the information acquisition region in the glass sheets 1 and 2 can also be heated. Therefore, when light is received by the sensor or the outside of the vehicle is photographed by the camera, it is possible to prevent light from being blocked in the window portion 42 by fogging or the like. As a result, accurate information can be acquired by the sensor or the camera. The position at which the protruding portion having such a window portion is provided is not particularly limited, and the protruding portion may be provided at a portion other than the lower portion of the shielding layer 4. For example, the protruding portion may be provided so as to protrude downward from the upper portion of the shielding layer 4.

In addition, for a vehicle not provided with a hood such as a truck, it is preferable to provide the protruding portion at a lower portion of the shielding layer 4. In this case, since the windshield is inclined at a small angle and is installed nearly vertically, and a vehicle height is high, it is necessary to reduce the width of the shielding layer so as not to obstruct a view of the driver. In such a case, it is preferable to supply power from a corner of the windshield, that is, to dispose a power supply unit at the corner.

<5-7>
The position of the power supply units 371 to 392 is not particularly limited, and may be other than the corners of the glass sheets 1 and 2, and may be appropriately changed according to the arrangement of cables. Therefore, the position of the notch 21 formed in the inner glass sheet 2 may also be appropriately changed. However, it is also possible to extend the power supply units 371 to 392 from the edge portions of the glass sheets 1 and 2 to the outside of the glass sheets 1 and 2 without forming a notch, and connect cables to the extended portions.

In the above embodiment, the power supply units 371 to 392 protrude above or to the sides of the glass sheets 1 and 2, but the protruding direction of the power supply units 371 to 392 is not particularly limited. For example, since water is likely to accumulate under the glass sheets 1 and 2 due to rain or the like, in order to prevent contact of water with the power supply units 372, 382, and 392 disposed on the lower side, it is preferable that the power supply units 372, 382, and 392 are protruded sideward from the glass sheets 1 and 2. On the other hand, the power supply units 371, 381, and 391 disposed on the upper side of the glass sheets 1 and 2 may be protruded, for example, either upward or sideward according to the position of cables, but the power supply units may be protruded sideward when there is a concern about water infiltration from the upper portion. In addition, by reducing the areas of the power supply units and the bus bars, the area of the shielding unit 4 that shields the power supply units and the bus bars can be reduced, whereby the visual field of a driver can be increased.

<5-8>

In the above embodiment, the vertical length of the second heater 32 is longer than those of the other heaters 31 and 33, but is not limited thereto, and may be appropriately changed according to the connection method between a power supply unit and a bus bar.

In the example of Fig. 9, four heaters (referred to, from left to right, as first to fourth heaters 31 to 34) are provided, and the lengths in the vertical direction of the second and third heaters 32 and 33 are increased, and the extension bus bars 50 are connected thereto. In this example, all the power supply units 55 extend in the horizontal direction. In this way, for example, when rainwater enters, its contact with the power supply units can be inhibited.

In the example of Fig. 10, the upper power supply units 60 are extended toward the upper edge side of the glass sheets 1 and 2, whereas the lower power supply units 70 are extended toward the side edge side of the glass sheets 1 and 2.

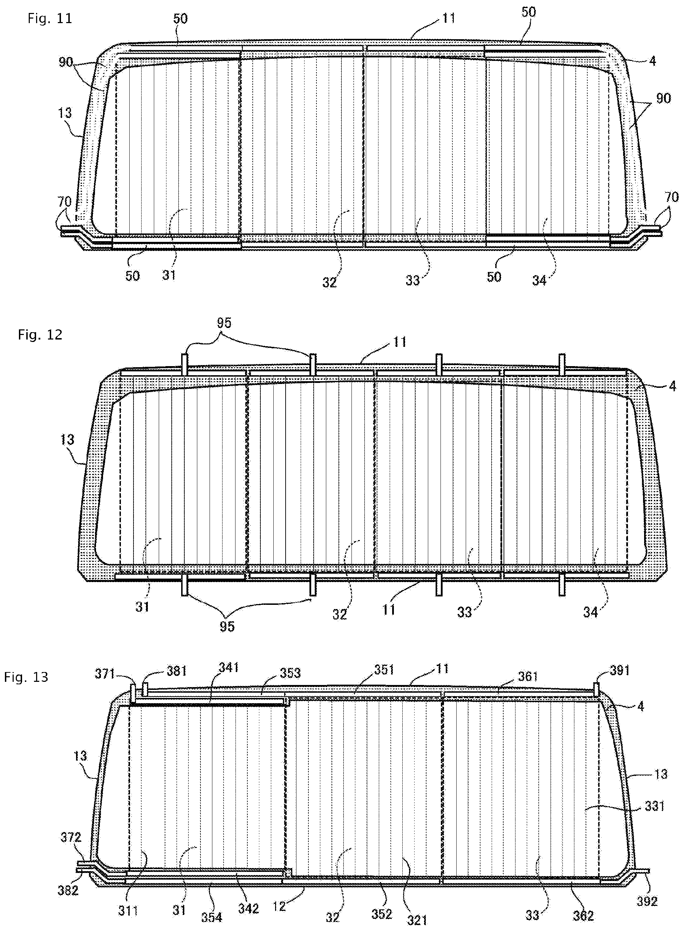

In the example of Fig. 11, the extension bus bars 90 are connected to the bus bars disposed on the upper side of the four heaters 31 to 34, and are passed along the side edges 13 and connected to the power supply units provided at the lower corners of the glass sheets 1 and 2.

In the example of Fig. 12, the four heaters 31 to 34 have the same length in the vertical direction, and power supply units 95 are provided near the centers of the respective bus bars and are extended toward the upper edge 11 side and the lower edge 12 side of the glass sheets 1 and 2.

<5-9>

By adjusting the area of the shielding layer 4, the area in which each heater is disposed in the glass sheets can be adjusted. For example, in the example of Fig. 13, three heaters 31 to 33 are arrayed, and the vertical lengths of the shielding layer 4 on the upper side and the lower side of the first heater 31 are increased. As a result, two bus bars are disposed on each of parts of the shielding layer 4 on the upper side and the lower side of the first heater 31. For this reason, in the glass sheets 1 and 2, the length in the vertical direction of the region where the first heater 31 is disposed is set short, and the length in the vertical direction of the shielding layer 4 is set long. On the other hand, the vertical lengths of parts of the shielding layer 4 on the upper side and the lower side of the second and third heaters 32 and 33 are set short, and one bus bar is disposed for each of the parts. As a result, the vertical length of the region where the second and third heaters 32 and 33 are disposed in the glass sheets 1 and 2 is longer than the vertical length of the region where the first heater 31 is disposed.

On the parts of the shielding layer 4 on the upper side and the lower side of the first heater 31 are disposed a first upper bus bar 341 and a first lower bus bar 342. To the first upper bus bar 341 is connected a first upper power supply unit 371 protruding upward from the glass sheets 1 and 2. To the first lower bus bar 342 is connected a first lower power supply unit 372 protruding sideward from the glass sheets 1 and 2.

On the parts of the shielding layer 4 on the upper side and the lower side of the second heater 32 are disposed a second upper bus bar 351 and a second lower bus bar 352. To the left end of the second upper bus bar 351 is connected a first extension bus bar 353. The first extension bus bar 353 is disposed above the first upper bus bar 341, and a second upper power supply unit 381 protruding upward from the glass sheets 1 and 2 is connected to the left end of the first extension bus bar. On the other hand, to the right end of the second lower bus bar 352 is connected a second extension bus bar 354. The second extension bus bar 354 is disposed below a third lower bus bar 362, and a third lower power supply unit 392 protruding sideward from the glass sheets 1 and 2 is connected to the right end of the second extension bus bar.

On the parts of the shielding layer 4 on the upper side and the lower side of the third heater 33 are disposed a third upper bus bar 361 and a third lower bus bar 342. A third upper power supply unit 391 projecting upward from the glass sheets 1 and 2 is connected to the first upper bus bar 341. To the third lower bus bar 362 is connected a third lower power supply unit 392 protruding sideward from the glass sheets 1 and 2.

Owing to the configuration described above, for example, when the side on which the second and third heaters 32 and 33 are disposed is located so as to face the driver's seat, the field of view of the driver can be widened. On the other hand, when the side on which the first heater 31 is disposed is located so as to face the driver's seat, the field of view on the side far from the driver can be widened. In this manner, it is possible to change the area of the region where each of the heaters 31 to 33 is disposed in the glass sheets 1 and 2 according to the application. Accordingly, a plurality of bus bars can be arranged on a part with an increased area of the shielding layer 4. Although in the example of Fig. 13 has been described a case where three heaters 31 to 33 are used, but the same applies to a case where two or four or more heaters are used. In addition, although in the example of Fig. 13, the part where the first heater is disposed in the glass sheets 1 and 2 is configured to have a reduced area, the area of the part where each heater is disposed may be appropriately changed, and for example, a plurality of parts may be configured to have a reduced area.

When the length in the vertical direction is shortened as in the first heater 31 illustrated in Fig. 13, the length of the heating wire 311 is shortened, so that the resistance value decreases. As a result, since the current value increases, the power value also increases, and heat is generated more greatly than the other heaters 32 and 33. Therefore, the first heater 31 of Fig. 13 can also be located on the driver's seat side in order to effectively inhibit fogging on the driver's seat side.

<5-10>
In the embodiment described above, bus bars are disposed above and below one heating sheet 30. However, in a case where bus bars employed are long, two or more heating sheets 30 may be arrayed with, each of above and below the plurality of arrayed heating sheets, one bus bar be disposed so as to straddle the heating sheets.

<5-11>
In the embodiment described above, the bus bars 341 to 362 and the heating wires 311 to 331 are disposed on the intermediate film 3 of laminated glass, but a single glass sheet may be used instead of forming the laminated glass, and the bus bars 341 to 362 and the heating wires 311 to 331 may be disposed on one surface thereof.

Reference Signs List

1 Outer glass sheet
2 Inner glass sheet
3 Intermediate film
31 to 33 Heater
311 to 331 Heating wire
301 Adhesive layer
341 to 362 Bus bar
4 Shielding layer

**Claims**

1.  A windshield comprising:

    a plate-shaped glass member having a heating region including at least a test region A of JIS R 3212; and
    a heat generator disposed in the heating region,
    wherein the heat generator comprises:

    a plurality of heaters arrayed in a first direction of the heating region and formed in a planar shape; and
    for each of the heaters, a pair of bus bars connected to both ends of the heater in a second direction substantially orthogonal to the first direction.

2.  The windshield according to claim 1, wherein an area of the heating region is 0.7 m$^2$ or more.

3.  The windshield according to claim 1 or 2, wherein in each of the heaters, a length in the first direction over which the bus bar is connected is shorter than a length of the heater in the second direction.

4.  The windshield according to any one of claims 1 to 3, wherein

    each of the heaters comprises a plurality of heating wires extending between the pair of bus bars, and
    the heating wires and the bus bars are formed of the same material.

5.  The windshield according to any one of claims 1 to 3, wherein

    each of the heaters comprises a plurality of heating wires extending between the pair of bus bars, and
    the heating wires and the bus bars are formed of different materials.

6.  The windshield according to any one of claims 1 to 5, wherein a resistance value at both ends of each of the bus bars is 2% or less of a resistance value of each of the heaters.

7.  The windshield according to any one of claims 1 to 6, wherein each of the bus bars is formed in a band shape, and one surface of each of the bus bars is in contact with each of the heaters.

8.  The windshield according to claim 7, wherein

the heat generator further comprises an intermediate film disposed between one surface of each of the bus bars and each of the heaters, and

the intermediate film has a thermal conductivity lower than that of the bus bars.

9. The windshield according to claim 8, wherein the intermediate film is formed of Sn-based or In-based lead-free solder.

10. The windshield according to any one of claims 1 to 9, wherein

each of the heaters comprises a plurality of heating wires extending between the pair of bus bars,

each of the bus bars is formed of a pair of sheet materials, and

the plurality of heating wires are sandwiched between the pair of sheet materials.

11. The windshield according to any one of claims 1 to 10, further comprising a shielding layer disposed on a peripheral edge portion of the glass member,

wherein each of the bus bars is disposed at a position corresponding to the shielding layer.

12. The windshield according to claim 11, wherein in the glass member, an area over which at least one of the plurality of heaters is disposed is different from an area over which the other heaters are disposed as a result of adjustment of an area of the shielding layer.

13. The windshield according to any one of claims 1 to 12, wherein

the glass member is formed in a rectangular shape having an upper edge, a lower edge, and a pair of side edges,

in the shielding layer, a width of portions along an upper edge and a lower edge of the glass member is larger than a width of portions along the side edges of the glass member,

the first direction is a direction along the upper edge and the lower edge of the glass member,

three of the heaters are arrayed in the first direction,

each of the bus bars is provided with a power supply unit configured to supply power to the bus bar, and

the power supply unit is disposed at a corner of the glass member.

14. The windshield according to claim 13, wherein a distance between the pair of bus bars connected to the heater disposed at a center in the first direction is wider than a distance between the pair of bus bars connected to each of the other heaters.

15. The windshield according to any one of claims 1 to 14, wherein

the glass member is formed of laminated glass including a pair of glass sheets, and

each of the heaters is disposed between the pair of glass sheets.

EP 4 467 525 A1

Fig. 1

Fig. 2

15

Fig. 3

311

311

L

D          D

Fig. 4

30

305

311

Fig. 5

Fig. 6

(a)

(b)

Fig. 7

Fig. 8

Fig. 9

Fig. 10

Fig. 11

Fig. 12

Fig. 13

## INTERNATIONAL SEARCH REPORT

| | International application No. |
| --- | --- |
| | **PCT/JP2023/001772** |

### A. CLASSIFICATION OF SUBJECT MATTER

*C03C 27/12*(2006.01)i; *H05B 3/03*(2006.01)i; *H05B 3/10*(2006.01)i; *H05B 3/86*(2006.01)i; *B60J 1/00*(2006.01)i;
*B60J 1/20*(2006.01)i; *B60S 1/02*(2006.01)i
FI: B60S1/02 300; C03C27/12 M; B60J1/00 J; B60J1/20 C; H05B3/03; H05B3/10 A; H05B3/86

According to International Patent Classification (IPC) or to both national classification and IPC

### B. FIELDS SEARCHED

Minimum documentation searched (classification system followed by classification symbols)

C03C27/12; H05B3/03; H05B3/10; H05B3/86; B60J1/00; B60J1/20; B60S1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-137826 A (DAINIPPON PRINTING CO LTD) 04 August 2016 (2016-08-04) paragraphs [0010]-[0034], fig. 1-3 | 1-15 |
| Y | JP 2000-030847 A (ASAHI GLASS CO LTD) 28 January 2000 (2000-01-28) paragraphs [0013]-[0016], fig. 1, etc. | 1-15 |
| Y | JP 2017-530894 A (SAINT-GOBAIN GLASS FRANCE) 19 October 2017 (2017-10-19) paragraph [0067], fig. 6, etc. | 7-15 |
| Y | WO 2020/039781 A1 (AGC INC.) 27 February 2020 (2020-02-27) paragraphs [0073]-[0084], fig. 3, etc. | 11-15 |
| A | US 2019/0098705 A1 (FORD GLOBAL TECHNOLOGIES, LLC) 28 March 2019 (2019-03-28) entire text, all drawings | 1-15 |
| A | CN 108966386 A (FUYAO GLASS INDUSTRY GROUP CO., LTD.) 07 December 2018 (2018-12-07) entire text, all drawings | 1-15 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 March 2023** | **28 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/001772**

| C. | DOCUMENTS CONSIDERED TO BE RELEVANT | |
|---|---|---|
| Category* | Citation of document, with indication, where appropriate, of the relevant passages | Relevant to claim No. |
| A | WO 2019/230733 A1 (AGC INC.) 05 December 2019 (2019-12-05)<br>entire text, all drawings | 1-15 |

Form PCT/ISA/210 (second sheet) (January 2015)

**INTERNATIONAL SEARCH REPORT**
Information on patent family members

International application No.

**PCT/JP2023/001772**

| Patent document cited in search report | | | Publication date (day/month/year) | Patent family member(s) | | | Publication date (day/month/year) |
|---|---|---|---|---|---|---|---|
| JP | 2016-137826 | A | 04 August 2016 | (Family: none) | | | |
| JP | 2000-030847 | A | 28 January 2000 | (Family: none) | | | |
| JP | 2017-530894 | A | 19 October 2017 | US<br>paragraph [0081], fig. 6, etc.<br>CN<br>KR | 2017/0135155<br><br>106457774<br>10-2017-0013926 | A1<br><br>A<br>A | |
| WO | 2020/039781 | A1 | 27 February 2020 | US<br>paragraphs [0093]-[0104], fig.<br>3, etc.<br>CN | 2021/0162716<br><br><br>112566880 | A1<br><br><br>A | |
| US | 2019/0098705 | A1 | 28 March 2019 | DE<br><br>CN | 102018123356<br><br>109552251 | A1<br><br>A | |
| CN | 108966386 | A | 07 December 2018 | (Family: none) | | | |
| WO | 2019/230733 | A1 | 05 December 2019 | US<br>entire text, all drawings<br>CN | 2021/0084720<br><br>112166092 | A1<br><br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017229727 A